# EUROPEAN PATENT APPLICATION

(11) **EP 0 596 420 A2**
(43) Date of publication of application: **11.05.1994**
(21) Application number: 93117544.2
(22) Date of filing: 29.10.1993
(51) Int. Cl.: G01T 1/29

(54) **Light collector for storage phosphor imaging system**

(30) Priority: 05.11.1992 US 972356
(71) Applicant: EASTMAN KODAK COMPANY, Rochester, New York 14650-2201 (US)
(72) Inventor: Boutet, John Claude, c/o EASTMAN KODAK COMPANY, Rochester, New York 14650-2201 (US); Pribe, Michael J., c/o EASTMAN KODAK COMPANY, Rochester, New York 14650-2201 (US); Brandt, Michael Bernard, c/o EASTMAN KODAK COMPANY, Rochester, New York 14650-2201 (US); Spahn, Robert George, c/o EASTMAN KODAK COMPANY, Rochester, New York 14650-2201 (US); Goeserich, Manfred H., c/o EASTMAN KODAK COMPANY, Rochester, New York 14650-2201 (US)
(74) Representative: Schmidt, Peter, Dipl.-Ing.

(57) **Abstract**

A light collector collects and detects light emitted from a storage phosphor in a storage phosphor imaging system. The collector includes a vertical mirror extending the width of the storage phosphor; and upper and lower mirrors forming an apex facing the vertical mirror. The vertical mirror and upper and lower mirrors form slots for passing a scanning beam of stimulating radiation through the collector to the surface of the storage phosphor and for admitting emitted light from the storage phosphor into the collector. The vertical mirror, and upper and lower mirrors form a substantially triangular cross-section which tapers from a large end near one edge of the storage phosphor to a small end near the other edge of the storage phosphor. A photodetector is positioned at the large end of the collector for receiving light from the storage phosphor and for generating an electrical signal in response thereto. The collector mirrors are formed from a rigid support member and a highly specularly reflective mirror adhesively mounted on the rigid member, the mirror including evaporated aluminum on a flexible base of polyethylene terephthalate.

## Description

The invention relates to apparatus for collecting light emitted from, reflected from or transmitted through an image recording medium. More particularly, this invention relates to apparatus for collecting light emitted from a stimulable storage phosphor.

In a storage phosphor imaging system, as described in US-A-Re. 31,487, a stimulable storage phosphor is exposed to an image-wise pattern of short wavelength radiation, such as X-ray radiation, to record a latent image pattern in the storage phosphor. The latent image is read out by stimulating the storage phosphor with a relatively long wavelength stimulating radiation, such as red or infrared light. Upon stimulation, the storage phosphor releases emitted radiation of an intermediate wavelength, such as blue or violet light, in proportion to the quantity of short wavelength radiation that was received. To produce a signal useful in electronic image processing, the storage phosphor is scanned in a raster pattern by a beam of light produced, for example, by a laser deflected by an oscillating or rotating scanning mirror. The emitted radiation from the stimulated storage phosphor is sensed by a photodetector, such as a photomultiplier tube, to produce electronic image signals.

In one type of scanning apparatus, the storage phosphor is placed on a translation stage and is translated in a page scan direction past a laser beam that is repeatedly deflected in a line scan direction to form a scanning raster.

To optimize the signal-to-noise ratio of the imaging system, it is desirable to collect as much of the emitted light as possible and to direct it to the photodetector. One form of light collector is proposed in US-A-4,346,295. The light collector proposed by Tanaka includes a light guide member comprising a sheet of light transmitting material that is flat on one end and rolled into an annular shape on the opposite end. The flat end of the light collector is positioned adjacent to the scan line on the storage phosphor sheet. The light receiving face of a photomultiplier tube is placed against the annular end of the light guiding member. Such a light collection system has the disadvantages of being expensive and inherently complicated to manufacture. Furthermore, the collection efficiency of transparent light guide members is limited due to their absorption in the wavelength range of light emitted by photostimulable phosphors.

An easily manufacturable, low cost, high efficiency light collector is disclosed in commonly assigned US-A-4,743,759. As disclosed in this patent, a light collector for collecting and detecting light emitted from a photostimulable phosphor sheet in a photostimulable phosphor imaging system, includes a roof mirror light collector having a bottom roof mirror extending the width of the photostimulable phosphor sheet and a top roof mirror positioned over the bottom roof mirror to define a mirror box having a nearly square cross-section. The roof mirrors define slots along their peaks for passing a scanning beam stimulating radiation through the light box to the surface of the photostimulable phosphor sheet and for admitting emitted light from the photostimulable phosphor sheet into the light box. A photodetector is positioned at an end of the light box to convert collected light into an electronic signal representative of the latent image stored in the phosphor sheet.

Another highly efficient light collector is disclosed in commonly assigned US-A-5,107,116. As disclosed, the light collector includes a vertical mirror and a V-roof mirror facing the vertical having upper and lower mirrors meeting at a right angle apex. The vertical mirror and V-roof mirror form slots for passing a scanning beam of stimulating radiation to a photostimulable phosphor sheet and for admitting emitted light into the mirror collector. The vertical mirror and V-roof mirror form a substantially triangular cross-section having a large dimension located at one end of the photostimulable phosphor sheet and tapering to a small dimension at the other end of the photostimulable phosphor sheet. A photodetector, such as a photomultiplier tube, is positioned at the large open end of the collector to convert collected light into an electronic image signal.

In each of the collectors disclosed in the latter two patents, it is desirable to achieve high light collection efficiency to minimize noise in the detected image signal, and to reduce the manufacturing cost of materials and assembly operations. Thus, the specular collection efficiency of the collector mirrors should be very high. Aluminum sheets having a brushed finish do not have a high enough reflectivity and the following highly specularly reflective materials are expensive: aluminum finished to high reflectivity by diamond fly cutting, glass mirror, and silver.

There is thus a problem in the collection of light from a scanned information medium to provide a light collector which has very high light collection efficiency and which is low in cost and easy to manufacture.

According to the present invention, there is disclosed a light collector apparatus and a method for making same which provides a solution to the problems of the art.

According to an aspect of the present invention, there is provided light collector apparatus having mirrors formed from rigid support members having adhesively mounted thereon a relatively stiff, flexible, very smooth base with a vacuum-coated metallic layer which is highly specularly reflective. The base is preferably polyethylene terephthalate and the vacuum-coated metallic layer is preferably aluminum.

According to the method of the present invention, there is produced a light collector having very high specular light collection efficiency which is low in cost and which is easy to manufacture. A light collector includes a plurality of highly specularly reflective mirrors made as follows:
(1) Rigid, preferably planar, support members are provided which are configured members to the dimensions of the collector.
(2) There is provided flexible, multilayered mirror material including a relatively stiff, flexible, very smooth base, such as a polyethylene terephthalate base, an adhesive layer on the back side of the base, a highly specularly reflective vacuum-coated metallic layer, such as an aluminum layer, on the front side of the base, a first peelable protective layer on the adhesive layer on the back side of the base, and a second peelable protective layer adhesively secured on the metallic layer.
(3) Individual pieces of mirror material are cut to the dimensions of the support members.
(4) For each collector support member, the corresponding piece of mirror material is adhesively secured to the support member after peeling off the first protective layer of said mirror material while leaving the second protective layer in place on said mirror material.
(5) After each support member has received its corresponding piece of mirror material, the support members are assembled together to form a collector, but just before assembly, the second protective layers are peeled off from the secured mirror material to expose the mirror layer.

In the detailed description of the invention presented below, reference is made to the accompanying drawings in which like elements are numbered with like elements.

FIG. 1 is a perspective view of a roof mirror light collector incorporating an embodiment of the present invention;
FIG. 2 is a perspective view of a split roof mirror light collector incorporating an embodiment of the present invention;
FIG. 3 is a side elevational view of the embodiment of FIG. 2;
FIG. 4 is a side elevational view useful in explaining the present invention;
FIGS. 5 and 6 are respectively side and front elevational views showing another collector incorporating an embodiment of the present invention.
FIG. 7 is a plan view of a piece of mirror material used in the present invention;
FIG. 8 is a sectional view taken along lines 7-7 in FIG. 7;
FIG. 9 is a flow diagram depicting the steps of the method of the present invention; and
FIG. 10 is a sectional view of a collector mirror according to the invention.

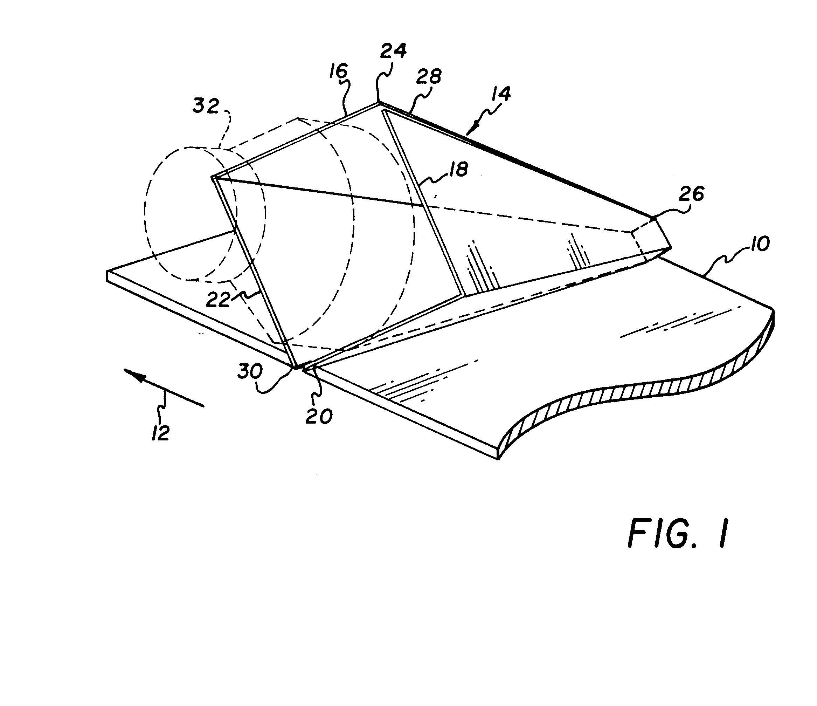

Referring now to FIG. 1, there is shown a V-roof mirror collector as described in US-A-4,743,759. As shown, a storage phosphor plate 10 is moved in the direction of arrow 12 past a V-roof mirror light collector 14. Collector 14 includes mirrors 16, 18, 20 and 22 which form a box shaped collector which extends across the width of storage phosphor plate 10 and which tapers from a large end 24 to a smaller end 26. Slots 28 and 30 at the top and bottom of the box mirror pass a laser scanning beam of stimulating radiation through the light box collector to the surface of storage phosphor plate 10. Light emitted by storage phosphor plate 10 is admitted into collector 14 through slot 30 and is reflected by mirrors 16, 18, 20 and 22 into a photomultiplier tube 32.

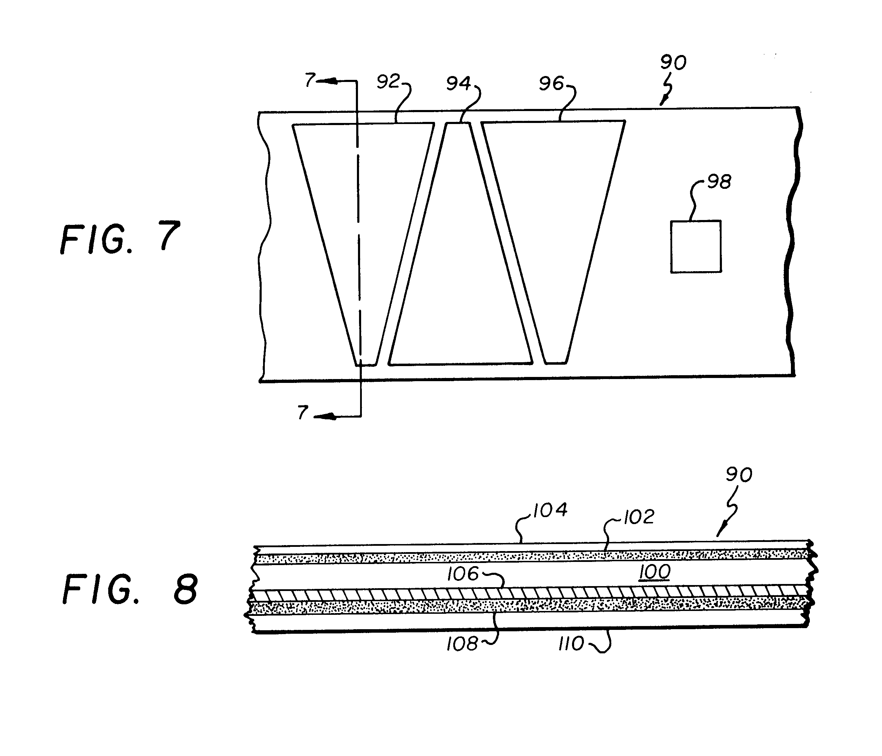

Mirrors 16, 18, 20 and 22 of collector 14 have high specular light collection efficiency and, as will be described in detail later, are preferably made according to the method of FIG. 7. Generally, mirrors 16, 18, 20 and 22 include support members having adhesively mounted on their inner faces, mirror material including a relatively stiff, flexible, very smooth base, such as polyethylene terephthalate, with a vacuum-coated metallic mirror layer (such as an aluminum mirror layer) which is highly specularly reflective.

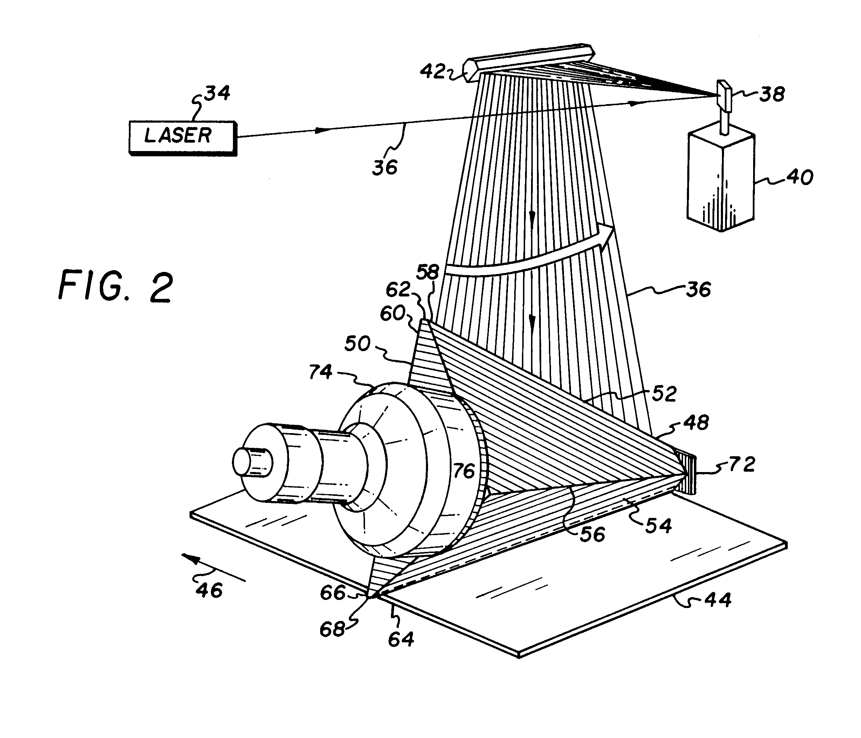

Referring now to FIG. 2, there is shown a storage phosphor imaging system having a split V-roof mirror collector incorporating an embodiment of the present invention. Although the collector will be described as useful in collecting light in a storage phosphor type system, it will be understood that the collector can be used in other light collecting applications, such as film digitizers or other applications where light is transmitted through, reflected from or emitted by an information or image medium. As shown in FIG. 2, a laser source 34 emits a laser beam 36 which is reflected from an oscillating mirror 38 driven by galvo 40. A mirror 42 deflects the scanning laser beam 36 to sweep it across a storage phosphor medium such as storage phosphor plate 44 which stores a latent X-ray image. For example, the storage phosphor plate 44 is scanned in a raster pattern by the coordinated movement of the scanning laser beam 36 across the width of plate 44 and the movement of plate 44 in the direction of arrow 46 under the scanning beam. Other storage phosphor media such as storage phosphor sheets, storage phosphor belts, storage phosphor drums, and so forth, may be used in a system incorporating the present invention.

The latent X-ray image is read out by means of radiation emitted at a wavelength different from the stimulating radiation wavelength of laser beam 36.

A split V-roof mirror collector 48 collects the emitted light from storage phosphor plate 44. Collector 48 includes a vertical mirror 50 and upper and lower mirrors 52 and 54, which form an apex 56, facing vertical mirror 50. The top edge 58 of mirror 52 and the top edge 60 of mirror 50 are spaced apart to form an upper slot 62. A lower edge 64 of mirror 54 and lower edge 66 of mirror 50 are spaced apart and form a bottom slot 68 which is adjacent to storage phosphor plate 44. Slots 62 and 68 are aligned and permit passage of laser scanning beam 36 to stimulate the storage phosphor plate 44. Slot 68 also allows light emitted by storage phosphor plate 44 to be transmitted into collector 48. The emitted light is reflected off mirrors 50, 52 and 54 and an apex mirror 72 into a photodetector photomultiplier tube (PMT) 74. Tube 74 has a filter 76 which passes to PMT 74 emitted light and not reflected stimulating light. For example, if the laser beam 36 has a wavelength in the red or infrared region and the light emitted by storage phosphor plate 44 is blue light, filter 76 is a blue filter which passes all blue emitted radiation to photomultiplier tube 74 but which blocks stimulating radiation of red or infrared light.

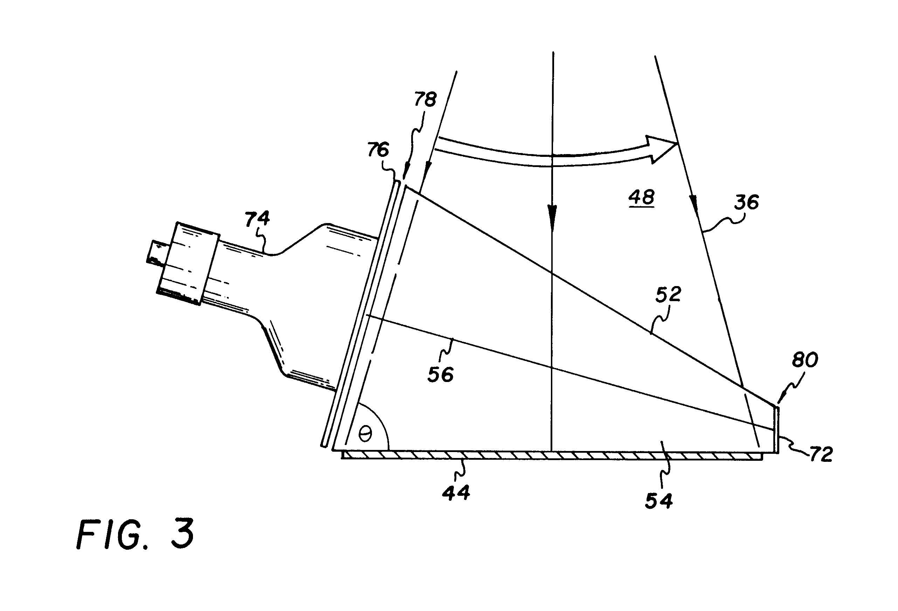

As shown more clearly in FIG. 3, collector 48 spans the width of storage phosphor plate 44 and is tapered from a larger end 78 to a smaller end 80. The larger end 78 is open and locates photomultiplier tube 74. The smaller end 80 of collector 48 is closed off by apex mirror 72.

Mirrors 50, 52 and 54 form a generally triangular cross-section which is tilted at end 78. PMT 74 is also tilted at the same angle. The tilt angle is determined by the angle of incidence 0 of the laser beam relative to storage phosphor plate 44 at the end of scan. Mirrors 50, 52 54 and 72 are highly specularly reflective, made according to the present invention, and preferably have peak specular reflection efficiency at the wavelength of the radiation emitted by storage phosphor plate 44. As will be described later, if storage phosphor plate 44 emits light in the blue light region, mirrors 50, 52, 54 and 72 preferably are of aluminum material. If the storage phosphor emits light in the red to near infrared region of the spectrum, then other metals such as copper, gold and silver would also function as effective, high reflectance mirrors.

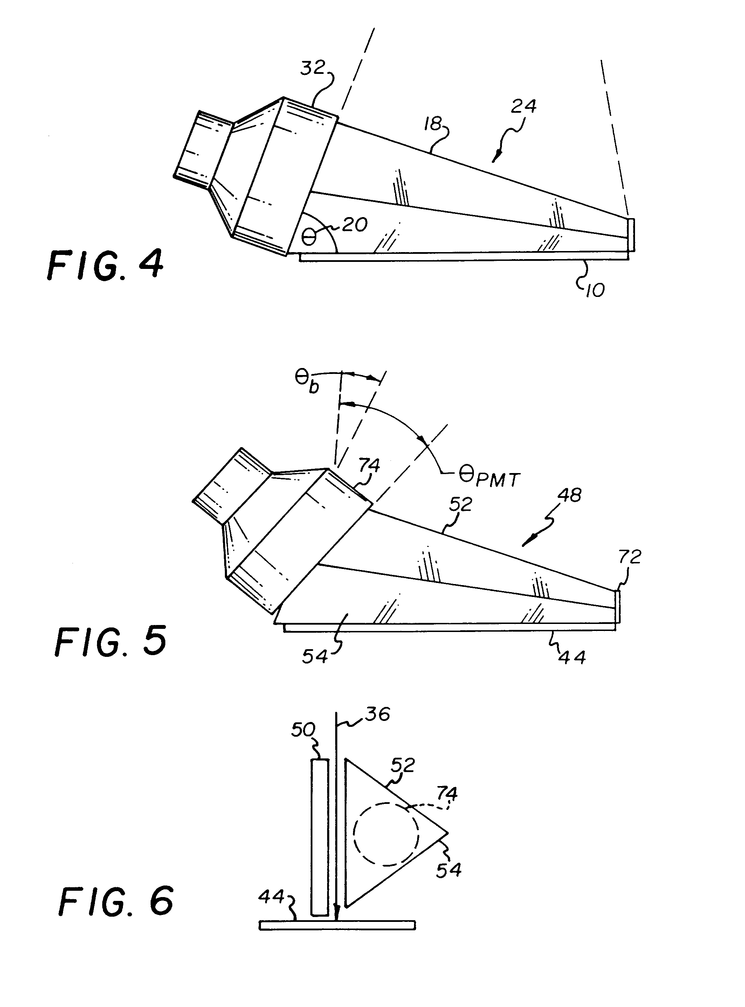

As shown in FIG. 4, (which is an elevational view of the double V-roof mirror collector shown in FIG. 1), the tilt angle which photomultiplier tube 74 can have is constrained by the angle at which the photomultiplier tube starts to interfere with the scanning laser beam 36. If the photomultiplier tube 74 is tilted to increase light collection efficiency, the scanning beam is interfered with and improper readout of phosphor plate 44 results. However, PMT 74 and its housing may be located to the side of the scanning beam. Thus, the tilt angle thereof is not restricted by the angle of incidence of the laser scanning beam since the photomultiplier tube 74 does not interfere with the beam.

In the collector shown in FIGS. 5 and 6, the tilt angle 8pₘₜ of the PMT 74 is greater than the maximum laser beam tilt angle 6_{b}. Mirrors 50, 52 and 54 are shortened in length at the upper slot 62 so that the larger end 78 is closer to the smaller end 80 of collector 48.

Referring now to FIGS. 7, 8, 9 and 10, the apparatus and method of the present invention will be described in more detail. According to the invention, there is provided light collector apparatus with mirrors which have high specular reflection efficiency and which are low in cost. The mirrors are made by a simple, low cost, easy to manufacture method. The method and apparatus will be described with respect to the collector shown in FIGS. 2, 3 and 4, but it will be understood that light collectors of other configurations (such as shown in FIGS. 1, 5, 6) are deemed to be within the scope of the present invention.

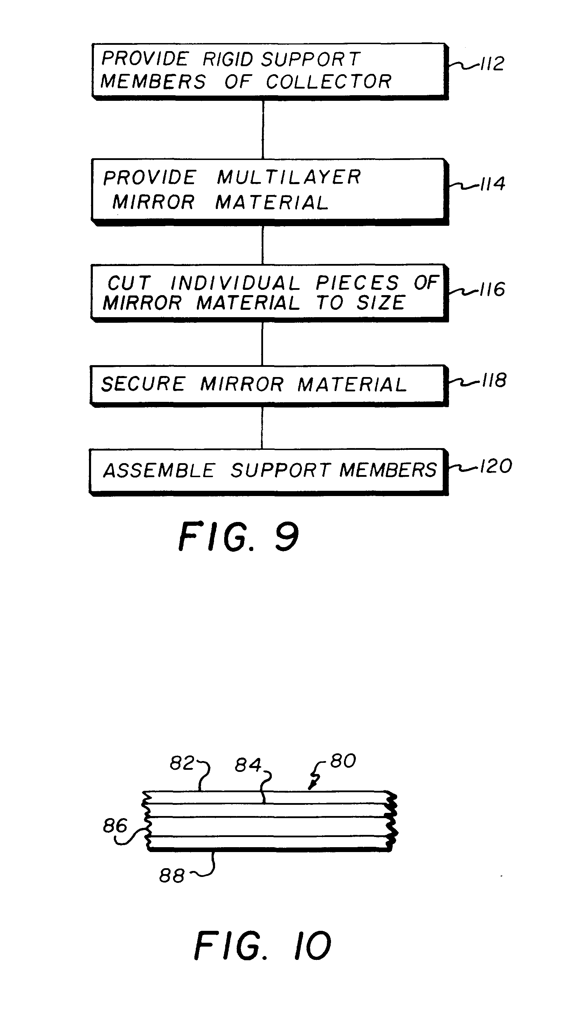

FIG. 10 is a cross sectional view of a mirror 80 used in the collector apparatus of the present invention. As shown, mirror 80 includes a rigid support member 82, adhesive layer 84, flexible base 86 and mirror layer 88. Support member 82 is of rigid material such as aluminum or rigid plastic. Adhesive layer 84 is of suitable adhesive material to securely mount base 86 with mirror layer 88 to support member 82. Base 86 is relatively stiff, flexible, and very smooth and preferably made of polyethylene terephthalate. Other suitable base materials which have very smooth, highly specular surfaces include polyimide, polycarbonate, and so forth. Mirror layer 88 is formed by vacuum coating aluminum on base 86 to an opaque thickness (that is, optical transmission density >2.0, preferably >3.0) with high specular reflectivity.

As an example, a 7 mil (.178 mm) thick, unsubbed web of polyethylene terephthalate is passed through a vacuum web coater. The web is first treated with an oxygen glow discharge pretreatment. An aluminum reflective layer is then formed on the pretreated polyethylene terephthalate by electron beam gun evaporation. The reflective layer is built up to an opaque density (for example, an optical transmission density of about 3). The evaporated aluminum layer has a measured specular reflective efficiency of approximately 91-93%. It will be understood that sputtering is an alternative vacuum coating method and that the pretreatment step may not be essential to the functionality of the coated material, dependent on the quality thereof.

The use of relatively thick 0.178 mm (7 mil) Estar provides a significant advantage over thinner base reflective tape. The thick base is stiff enough to bridge scratches and other recessed imperfections in the mirror support plates. This reduces scatter which can cause flare in the collector.

FIGS. 7 and 8 show a flexible web 90 of multilayer mirror material from which pieces 92, 94, 96 and 98 are cut to substantially the dimensions of mirrors 50, 52, 54 and 72 of collector 48 shown in FIGS. 2 and 3. Web 90 includes a base 100 of stable, flexible material such as polyethylene terephthalate. The back side of base 100 has a first adhesive layer 102 protected by a first peelable protective layer 104. The front side of support 100 has a highly specularly reflective mirror layer 106 of vacuum-coated aluminum which is protected by a second peelable protective layer 110 adhesively secured to mirror layer 106 by second adhesive layer 108.

Referring now to FIG. 9, there is shown a flow diagram of an embodiment of the method of the present invention for producing a light collector of the configuration of FIGS. 2-4. The first step (box 112) is to provide rigid planar support members configured to the dimensions of the collector. The next step (box 114) is to provide a web of mirror material such as web 90 shown in FIG. 8. The web of mirror material is cut (box 116) to form individual pieces of substantially the dimensions of the collector support members. Then, for each collector support member (box 118), the corresponding piece of mirror material is adhesively secured to the support member, after peeling off the first protective layer 104 from the base 100, while leaving in place the second protective layer 110 to protect mirror layer 106.

Finally, (box 120) after each support member has received its corresponding piece of mirror material, the support members are assembled together to form a collector, but just before assembly, the second protective layer 110 is peeled off to expose the aluminum mirror layer 106.

The light collector of the present invention is useful in radiographic storage phosphor scanning apparatus. It has the advantages of very high specular light collection efficiency, and low cost and ease of manufacture.

## Claims

1. Light collector for an imaging system that includes means (38,42) for scanning an information medium (44) with a beam of radiation (36) and photodetector means (74) for detecting light transmitted through, reflected from or emitted by the scanned information medium (44), said light collector (48) being characterized by:
a plurality of light collector mirrors (50,52,54) configured to pass the scanning beam of radiation (36) to scan an information medium (44) and to collect light from the information medium (44) for detection by the photodetector means (74), wherein each of the light collector mirrors (50,52,54) includes a rigid support member (82), a relatively rigid, flexible, very smooth base (86), adhesively (84) mounted on the support member (82), and a vacuum-coated metallic mirror layer (88) on the base (86) which has very high specular reflectivity.

2. Light collector according to claim 1 further comprising:
a vertical, highly specularly reflective mirror (50) extending the width of the scanned medium (44) and upper and lower highly specularly reflective mirrors (52,54) forming an apex facing the vertical mirror (50), the upper mirror (52) having an edge (58) adjacent to and spaced from the upper edge (60) of the vertical mirror (50) and the lower mirror (54) having an edge (64) adjacent to and spaced from the lower edge (66) of the vertical mirror (50) thereby to form aligned slots (62,68) for the passage of a scanning beam (36) of radiation to a medium (44) to be scanned and for allowing light emitted by, reflected from or transmitted through the scanned medium (44) to enter the collector (48);
wherein the vertical mirror (50) and the upper and lower mirrors (52,54) form a substantially triangular cross-section which tapers from a large end of the collector (48) to a small end of the collector (48).

3. The light collector of claim 2 including an apex mirror (72) located at the small end of the light collector (48) and closing off the small end.

4. Light collector according to claims 1, 2 or 3, wherein the mirror material (88) is vacuum-coated aluminum and the base (86) is polyethylene terephthalate.

5. The light collector of claim 1 wherein the flexible base (86) has a thickness which makes the base (86) stiff enough to bridge scratches and other recessed imperfections in the support member (82) in order to reduce scatter and consequent flare in the mirror layer (88).

6. The light collector of claim 5 wherein the flexible base (86) has a thickness of approximately 0.178 mm (7 mils).

7. Light collector (48) according to one of the preceding claims wherein said scanned medium (44) is a storage phosphor medium scanned by a beam (36) of stimulating radiation; and
said photodetector means (74) having a light receiving face located at the large end of the light collector (48) for receiving light emitted by the photostimulable phosphor medium (44) which has been collected by the collector (48) and for generating an electrical signal in response thereto.

8. A method of producing a light collector having very high specular light collection efficiency which is low in cost and which is easy to manufacture, characterized by the steps of:
providing (112) rigid support members which are configured to the dimensions of a light collector for collecting light emitted by, reflected from or transmitted through an information medium scanned by a light beam;
providing (114) flexible, multilayered mirror material (90), including a relatively stiff, flexible, very smooth base (100), an adhesive layer (102) on the back side of the base (100), a highly specularly reflective vacuum-coated metallic layer (106) on the front side of the base (100), a first peelable protective layer (104) on the adhesive layer (102) on the back side of the base (100), and a second peelable protective layer (110) adhesively (108) secured on the metallic layer (106);
cutting (116) from the mirror material, individual pieces which are substantially the dimensions of corresponding support members;
for each collector support member, adhesively securing (118) to the support member, the corresponding piece of mirror material, after peeling off the first protective layer while leaving the second protective layer in place; and
after each collector support member has received the corresponding piece of mirror material, assembling (120) the support members together to form the collector, but just before the assembly, peeling off the respective second protective layer from the secured mirror material to expose the metallic mirror layer.

9. The method of claim 8 wherein the base (100) of the mirror material is polyethylene terephthalate and the metallic layer (106) is vacuum-coated aluminum.
